# EUROPÄISCHE PATENTSCHRIFT

(11) **EP 3 283 833 B1**
(45) Veröffentlichungstag und Bekanntmachung des Hinweises auf die Patenterteilung: **13.03.2019**
(21) Anmeldenummer: 16719780.5
(22) Anmeldetag: 06.04.2016
(51) Int. Cl.: B01D 53/26, F26B 21/14, F26B 3/04, H01B 3/56, H01H 33/56, H02B 13/055

(54) **VERFAHREN ZUM TROCKNEN EINES GASRAUMS SOWIE ANORDNUNG UMFASSEND EINEN SCHUTZGASGEFÜLLTEN GASRAUM**
METHOD FOR DRYING A GAS CHAMBER AND ARRANGEMENT COMPRISING A PROTECTIVE-GAS FILLED CHAMBER
PROCÉDÉ DE SÉCHAGE D'UN COMPARTIMENT À GAZ AINSI QU'ENSEMBLE COMPRENANT UN COMPARTIMENT À GAZ REMPLI D'UN GAZ PROTECTEUR

(30) Priorität: 15.04.2015 DE 102015206744
(43) Veröffentlichungstag der Anmeldung: 21.02.2018
(73) Patentinhaber: innogy Netze Deutschland GmbH, 45128 Essen (DE)
(72) Erfinder: TABKE, Thorsten, 46485 Wesel (DE); SAEWE, Thomas, 58710 Menden (DE)
(74) Vertreter: Richly & Ritschel Patentanwälte PartG mbB
(86) Internationale Anmeldenummer: PCT/EP2016/057531
(87) Internationale Veröffentlichungsnummer: WO 2016/165996

(56) Entgegenhaltungen:
- CN-U- 203 928 605
- DE-A1-102011 053 288
- UA-C2- 106 430

## Beschreibung

Die Erfindung betrifft ein Verfahren zum Trocknen eines Gasraums mit einer in dem Gasraum vorherrschenden Schutzgasatmosphäre unter Überdruck.
Die Erfindung betrifft weiterhin eine Anordnung umfassend wenigstens einen mit Schutzgas gefüllten Gasraum. Eine derartige Anordnung und ein derartiges Verfahren sind aus CN203928605U bekannt.

Ein Gasraum im Sinne der vorliegenden Erfindung kann beispielsweise ein gasisoliertes elektrisches Hochspannungsbetriebsmittel oder ein Behälter für ein solches sein. Als Hochspannungsbetriebsmittel im Sinne der vorliegenden Erfindung kommen beispielsweise elektrische Leistungsschalter und Messwandler in Betracht. Derartige elektrische Betriebsmittel sind häufig mit einem Isolier- und Löschgas als Schutzgas gefüllt. Als Löschgas kommt beispielsweise SF6 (Schwefelhexafluorid) in Betracht. Eine Kontakttrennung in einem Leistungsschalter führt zunächst zu einem Lichtbogen zwischen den Kontakten, die beispielsweise in einem mit Isoliergas gefüllten Schaltgerätepol angeordnet sind. In den Schaltgerätepolen ist das Isoliergas unter einem vorgegebenen Mindestdruck eingeschlossen und bewirkt ein Erlöschen eines entstehenden Lichtbogens.
Isoliergasgefüllte Gehäuse von elektrischen Betriebsmitteln sind in der Regel als Druckbehälter ausgebildet, die bestimmte Dichtigkeitsanforderungen erfüllen müssen.

Die sichere Funktion der elektrischen Betriebsmittel ist dabei insbesondere von der Reinheit des Schutzgases beziehungsweise des SF6 Gases abhängig. Die Dichtigkeit des Gasraumes wird üblicherweise mit Druck- und/oder Dichtewächtern überwacht.

Je nach Art des elektrischen Betriebsmittels kann ein Gasraum zur Aufnahme eines elektrischen Betriebsmittels beispielsweise mit einem Nennüberdruck von etwa 6 bis 8 bar betrieben werden.

Unter dem Nennüberdruck im Sinne der vorliegenden Erfindung wird derjenige Betriebsdruck verstanden, für den der Gasraum ausgelegt ist. Der tatsächliche Betriebsdruck des Gasraumes kann über dem Nennüberdruck aber auch unter dem Nennüberdruck liegen.

Unter Überdruck im Sinne der vorliegenden Erfindung wird ein Druck über Atmosphärendruck, das heißt ein Druck über 1.013 mbar verstanden.

Auch wenn der Betriebsdruck des Gasraumes ein Vielfaches des Atmosphärendrucks beträgt, so lässt sich in der Regel konstruktionsbedingt das Eindringen von Feuchtigkeit in Form von Wasserdampf durch Diffusion in den Gasraum nicht vermeiden. Der in den Gasraum eindringende Wasserdampf verringert die Reinheit des Schutzgases und damit dessen die elektrische Eigenschaften (Permittivität), was grundsätzlich nicht wünschenswert ist.

Grundsätzlich sollte der Feuchtigkeitsanteil im Schutzgas so gering sein, dass ein Drucktaupunkt des Schutzgases von -5°C nicht überschritten wird.

Es ist daher grundsätzlich bekannt, Gasräume mit Schutzgasatmosphäre, die elektrische Betriebsmittel aufnehmen, mit Mitteln zur Adsorption von Feuchtigkeit auszustatten. In der Regel werden die Adsorber aus Aluminiumoxid oder mit Molekularsieben, beispielsweise in Form von Zeolithen vorgesehen, die in Bereichen des Gasraums mit einer niedrigen elektrischen Feldstärke angeordnet werden. Solche "Filter" zur Aufnahme von Feuchtigkeit haben eine begrenzte Kapazität. Wenn diese ausgetauscht werden müssen, ist hierzu eine Außerbetriebnahme des Betriebsmittels erforderlich. Ältere schutzgasgefüllte elektrische Betriebsmittel sind nicht mit solchen Filtereinrichtungen versehen, eine nachträgliche Ertüchtigung solcher elektrischer Betriebsmittel ist aufwendig.

Der Erfindung liegt daher die Aufgabe zugrunde, ein Verfahren zum Trocknen eines Gasraums mit einer in dem Gasraum vorherrschenden Schutzgasatmosphäre unter Überdruck bereitzustellen, welches während des Betriebes des elektrischen Betriebsmittels Anwendung finden kann und mit welchem eine Nachrüstung oder konstruktive Änderung des Betriebsmittels vermieden wird. Das Verfahren soll insbesondere lebensdauerbegleitend anwendbar sein.

Der Erfindung liegt weiterhin die Aufgabe zugrunde, eine entsprechende Anordnung an einem elektrischen Betriebsmittel beziehungsweise eine entsprechende Anordnung umfassend wenigstens einen schutzgasgefüllten Gasraum bereitzustellen.

Die Aufgabe wird gelöst mit den Merkmalen des Anspruchs 1. Vorteilhafte Ausgestaltungen der Erfindung ergeben sich aus den Unteransprüchen.

Die Aufgabe wird weiterhin gelöst durch die nebengeordneten Verfahrensansprüche.

Nach einem Gesichtspunkt der Erfindung ist ein Verfahren zum Trocknen eines Gasraums mit einer in dem Gasraum vorherrschenden Schutzgasatmosphäre unter Überdruck vorgesehen, mit einem Betriebsdruck p1 und einem vorgegebenen Mindestdruck pₘᵢₙ, wobei der Mindestdruck pₘᵢₙ des Gasraums überwacht wird und der Betriebsdruck p1 größer als der Mindestdruck pₘᵢₙ, wobei das Verfahren folgende Schritte umfasst:
a) Entnehmen einer Teilmenge V1 des Schutzgases aus dem Gasraum, wobei die Teilmenge V1 einer Druckdifferenz Δp äquivalent ist, die kleiner oder gleich der Differenz zwischen p1 und pₘᵢₙ ist,
b) Einbringen einer Teilmenge V2 eines trockenen oder getrockneten Schutzgases in den Gasraum bis zu einem Gasdruck p2, der größer als pₘᵢₙ ist und
c) Wiederholen der Verfahrensschritte a) und b) nach einer vorgegebenen Wartezeit Δt.

Der Erfindung liegt die Erkenntnis zugrunde, dass sich die Feuchtigkeit im Gasraum verteilt auf die Gasphase innerhalb des Schutzgases und auf die festen Teile der in dem Gasraum angeordneten Betriebsmittel sowie auf die Umfassungswände des Gasraumes. Wird ein Feuchtigkeitsgleichgewicht zwischen den festen Teilen des Gasraums und dessen Einbauten und dem Schutzgas erreicht, befindet sich der überwiegende Teil der Gesamtfeuchtigkeit auf oder in den Feststoffen. Dieser Teil der Feuchtigkeit hat keine unmittelbare Wirkung auf die Zuverlässigkeit der Anlagenfunktion.

Da allerdings ein großer Teil der Feuchtigkeit nicht in der Gasphase vorliegt, ist grundsätzlich ein vollständiger Austausch des Schutzgases unbehelflich, da ein wesentlicher Teil der Feuchtigkeit innerhalb des Gasraumes verbleibt.

Die Verfahrensschritte a) und b) können gleichzeitig oder hintereinander durchgeführt werden. Die Verfahrensschritte a) bis c) werden vorzugsweise in der Reihenfolge ihrer Aufzählung durchgeführt.

Erfindungsgemäß macht sich die Erfindung einen Differenzdruck zwischen einem einzuhaltenden und Mindestdruck pₘᵢₙ innerhalb des Gasraums und einem Nenndruck des Gasraums oder einem tatsächlichen Betriebsdruck p1 des Gasraums zunutze, um das im Gasraum vorherrschende Feuchtigkeitsgleichgewicht zugunsten einer Abtrocknung der Feststoffe zu verändern. Dazu wird erfindungsgemäß eine sogenannte "Beatmung" des Gasraums im Bereich einer zulässigen Druckdifferenz zwischen Mindestdruck pₘᵢₙ und tatsächlichen Betriebsdruck p1 genutzt.

Erfindungsgemäß ist also vorgesehen, zyklisch eine Teilmenge des Schutzgases innerhalb des Gasraums auszutauschen, wodurch jedes Mal das Dampfdruckgefälle zwischen Wasser und Schutzgas erhöht wird und ein Teil des Wassers von der flüssigen Phase in die Gasphase übergeht. Das Entnehmen einer Teilmenge V1 an Schutzgas aus dem Gasraum kann äquivalent einer Druckdifferenz Δp zwischen p1 (Betriebsdruck) und pₘᵢₙ (Mindestdruck) erfolgen, wobei diese Druckdifferenz nicht vollständig ausgeschöpft werden muss.

Zunächst wird also in einem ersten Verfahrensschritt eine Teilmenge V1 an feuchtem Schutzgas aus dem Gasraum entnommen und im Austausch hierzu eine Teilmenge V2 eines trockenen oder getrockneten Schutzgases in den Gasraum eingebracht. Nach einer gewissen Zeit wird sich ein neues Feuchtigkeitsgleichgewicht innerhalb des Gasraums einstellen, wobei ein Teil des Wassers von der flüssigen Phase in die Gasphase übertritt.

Dieser Zeitraum wird erfindungsgemäß durch die vorgegebene Wartezeit Δt beschrieben. Nach einer Wartezeit wird dann wieder eine Teilmenge an Schutzgas aus dem Gasraum entnommen und eine Teilmenge eines trockenen oder getrockneten Schutzgases in den Gasraum verbracht, und zwar bis zu einem Gasdruck p2 der größer als der Gasdruck pₘᵢₙ ist. Die weiteren Schritte des Verfahrens sehen zyklisch die Entnahme von Teilmengen V1+n feuchten Gases und das Einbringen von Teilmengen V2+n eines trockenen oder getrockneten Schutzgases in den Gasraum vor.

Der Vorgang kann vollständig druckgesteuert, also als Funktion des zur Verfügung stehenden Differenzdrucks zwischen dem Mindestdruck pₘᵢₙ und dem Betriebsdruck p1 durchgeführt werden. Die Wartezeiten können fest vorgegeben sein, alternativ können die Wartezeiten als Funktion einer Feuchtigkeitsmessung des entnommenen Gases ermittelt werden.

Bei einer Variante des Verfahrens ist vorgesehen, dass die Feuchtigkeit der entnommenen Füllmenge V1 des Schutzgases gemessen wird und die Verfahrensschritte a) bis c) solange wiederholt werden, bis der Feuchtigkeitsgehalt des entnommenen Schutzgases einen vorgegebenen Wert unterschreitet.

Zweckmäßigerweise wird die Teilmenge V1 so bemessen, dass der Differenzdruck Δp etwa der Differenz zwischen Betriebsdruck p1 und dem Mindestdruck pₘᵢₙ des Gasraumes beträgt.

Grundsätzlich kann vorgesehen sein, den zu trockenen Gasraum in technisch zulässigem Maße zu überfüllen, das heißt, dass der Betriebsdruck p1 des Gasraums größer als der Nenndruck des Gasraums ist.

Zweckmäßigerweise wird die entnommene Teilmenge V1 des Schutzgases mittels wenigstens eines Trockenfilters außerhalb des Gasraums getrocknet und danach in einen weiteren Gasraum eingespeichert.

Zweckmäßigerweise ist als zu überwachender Gasraum ein Behälter für ein elektrisches Betriebsmittel oder im weitesten Sinne ein elektrisches Betriebsmittel vorgesehen, der oder das mit einem Löschgas als Schutzgas befüllt ist. Als Schutzgas kann beispielsweise SF6 (Schwefelhexafluorid) vorgesehen sein.

Alternativ oder zusätzlich kann vorgesehen sein, dass die Teilmenge V1 in einen Vorratsbehälter eingespeichert wird, aus welchem die Teilmenge V2 entnommen wird.

Grundsätzlich kann das Verfahren mit einer Vielzahl von Gasräumen betrieben werden, zwischen denen Gasvolumina V1+n ausgetauscht werden.

Im einfachsten Fall wird das Verfahren mit einem zu überwachenden Gasraum und einer Gasquelle in Form eines Vorratsbehälters betrieben.

Wie bereits erwähnt, kann die Teilmenge V1 nach Trocknung in einen weiteren Gasraum eingespeist werden, der als Behälter für ein elektrisches Betriebsmittel oder als elektrisches Betriebsmittel ausgebildet ist.

Nach einem anderen Gesichtspunkt der Erfindung betrifft diese eine Anordnung umfassend einen ersten und einen zweiten mit Schutzgas gefüllten Gasraum, ein den ersten und zweiten Gasraum verbindendes Leitungssystem, wenigstens einen in dem Leitungssystem angeordneten Verdichter, wenigstens ein in dem Leitungssystem angeordnetes Trocknungsaggregat, Mittel zur Erfassung des Gasdrucks innerhalb des Leitungssystems, Ventile, die so ansteuerbar sind, vorzugsweise elektrisch, dass der Verdichter Gas von dem ersten Gasraum in den zweiten Gasraum und Gas von dem zweiten Gasraum in den ersten Gasraum fördern kann, Mittel zur Steuerung des Verdichters in Abhängigkeit des Drucks innerhalb des Leitungssystems oder innerhalb der Gasräume sowie Mittel zur Steuerung der Ventile in Abhängigkeit der gewünschten Förderrichtung des Gases. Als Verdichter kann beispielsweise ein Kolbenverdichter vorgesehen sein, der Gas von dem zweiten Gasraum in den ersten Gasraum und wahlweise Gas von dem ersten Gasraum in den zweiten Gasraum fördert. Ein Feuchtigkeitsfilter ist zweckmäßigerweise dem Verdichter vorgeschaltet. Das Filter kann beispielsweise als Filterpackung mit einem Feuchtigkeit aufnehmenden Granulat ausgebildet sein.

Die Anordnung ist zweckmäßigerweise zur Durchführung des zuvor beschriebenen Verfahren ausgebildet.

Die Ventile innerhalb des Leitungssystems sind zweckmäßigerweise so steuerbar und angeordnet, dass mittels eines einzigen Verdichters eine bidirektionale Förderung des Gases zwischen zwei Gasräumen möglich ist, wobei wenigstens einer der Gasräume eine elektrisches Betriebsmittel aufnimmt oder als elektrisches Betriebsmittel ausgebildet ist. Wie vorstehend bereits erläutert, können sowohl der erste als auch der zweite Gasraum ein elektrisches Betriebsmittel aufnehmen oder als solches ausgebildet sein, alternativ kann beispielsweise der zweite Gasraum oder ein weiterer Gasraum als Vorratsbehälter für das Schutzgas ausgebildet sein.

Grundsätzlich kann vorgesehen sein, dass das Leitungssystem jeweils mit einem einzigen Anschluss an die Gasräume angeschlossen ist. Bestehende elektrische Betriebsmittel mit Schutzgasatmosphäre verfügen üblicherweise über nur einen Gasbefüll- und entnahmeanschluss.

Ist das Volumen innerhalb des Gasraums, welches für einen Gasaustausch zur Verfügung steht, verhältnismäßig klein, könnte bei einer bidirektionalen Förderung von Gas von einem Gasraum in den anderen und zurück unter Umständen eine Hin- und Herförderung von feuchtem Gas in und aus einem Gasraum stattfinden, ohne dass tatsächlich ein Austausch bewerkstelligt worden wäre. Um auch bei verhältnismäßig kleinen Gasräumen einen sicheren Betrieb der Anordnung zu gewährleisten, kann vorgesehen sein, dass das Leitungssystem wenigstens einen Ringleitungsabschnitt umfasst, an den wenigstens einer der Gasräume unmittelbar angeschlossen ist.

Die Erfindung wird nachstehend anhand eines in den Zeichnungen dargestellten Ausführungsbeispiels erläutert.

Es zeigen:
- Fig. 1:: eine schematische Darstellung einer Anordnung zur Trocknung eines schutzgasbefüllten Gasraums,
- Fig. 2:: eine Variante des Anschlusses der Gasleitung 12 an den ersten Gasraum,
- Fig. 3:: ein Diagram, welches die Betriebsweise des Verdichters bei dem erfindungsgemäßen Verfahren veranschaulicht.

Das Verfahren gemäß der Erfindung wird nachstehend unter Bezugnahme auf ein Ausführungsbeispiel beschrieben, bei dem ein erster Gasraum 1 als Behälter für ein elektrisches Betriebsmittel und ein zweiter Gasraum 2 als Gasvorratsbehälter (Gasflasche) ausgebildet ist. Der erste Gasraum 1 und der zweite Gasraum 2 sind über eine Gasleitung 12 miteinander verbunden. In der Gasleitung 12 sind ein Verdichter 3 und ein Filter 4 so verschaltet, dass ein bidirektionaler Betrieb des Verdichters 3 möglich ist. Hierzu ist der Verdichter 3 in einer Art hydraulische/pneumatische Brückenschaltung angeordnet, die über insgesamt vier elektrisch ansteuerbare Ventile 5.1, 5.2, 5.3 und 5.4 betätigbar ist. Die Ventile 5.1, 5.2, 5.3 und 5.4 sind über eine Steuerleitung 6 an eine Steuereinheit 7 angeschlossen, die über wiederum eine Bedieneinheit 8 betätigbar ist. Die Steuereinheit 7 kommuniziert darüber hinaus mit Druckaufnehmern 9.1 und 9.2 und Feuchtigkeitssensoren 10.1 und 10.2 in der Steuerleitung 6.

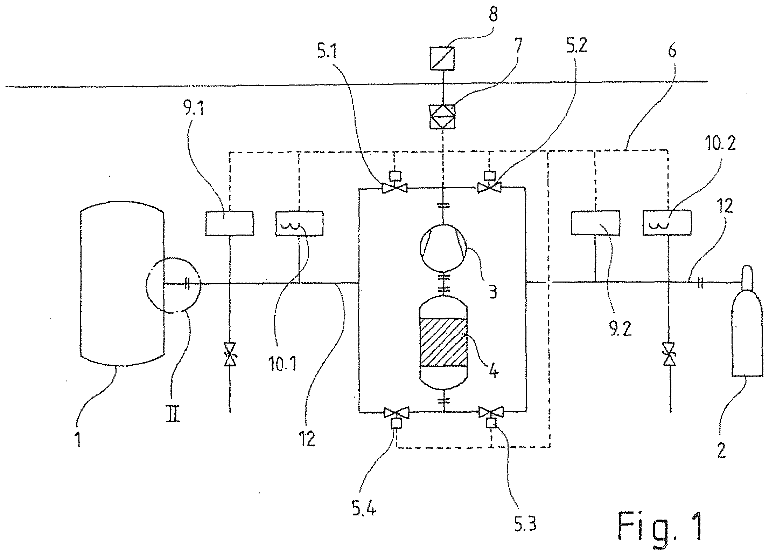

Das Verfahren gemäß der Erfindung wird nunmehr im Folgenden unter Bezugnahme auf die Anordnung gemäß Figur 1 erläutert.

Wie bereits erwähnt, ist der erste Gasraum 1 als elektrisches Betriebsmittel mit einer SF6 Füllung als Schutzgas ausgebildet.

In dem beschriebenen Beispiel hat der erste Gasraum 1 ein Gasvolumen von ca. 150 1 und einen Nennüberdruck von 6 bar. Der Betriebsdruck p1 innerhalb des ersten Gasraums 1 kann beispielsweise 0,3 bis 0,5 bar oberhalb des Nennüberdrucks betragen. Unter der Annahme das der Mindestdruck pₘᵢₙ etwa dem Nennüberdruck von 6 bar beträgt, stünden 0,3 bis 0,5 bar als Durckdifferenz zwecks "Beatmung" des ersten Gasraums 1 zur Verfügung. Grundsätzlich kann der Mindestdruck pₘᵢₙ kleiner als der Nennüberdruck sein, was hier der Einfachheit halber nicht angenommen wird.

In einem ersten Verfahrensschritt wird aus dem ersten Gasraum 1 ein Teilvolumen an Schutzgas V1 entnommen und über das Filter 4 mittels des Verdichters 3 dem zweiten Gasraum 2 zugeführt. Dabei erfolgt eine Trocknung der entnommenen Teilmenge V1 mittels des Filters 4 und eine Einspeicherung dieser Teilmenge V1 in dem zweiten Gasraum 2. Das Ventil 5.1 ist dabei geschlossen, das Ventil 5.4 ist geöffnet, das Ventil 5.2 ist geöffnet und das Ventil 5.3 ist geschlossen. Alle Ventile 5.1, 5.2, 5.3 und 5.4 sind stromlos geschlossen, das heißt, dass die Ventile 5.1, 5.2, 5.3 und 5.4 beispielsweise als Magnetventile ausgebildet sind, die sich bei entsprechender Bestromung öffnen.

Bei der Entnahme der Teilmenge V1 aus dem ersten Gasraum 1 wird der Verdichter 3 solange betrieben bis die für die Entnahme des Schutzgases zur Verfügung stehende Δp verbraucht ist. Eine Erfassung des in den ersten Gasraum 2 anstehenden Drucks erfolgt über den Druckaufnehmer 9.1. Ist die für die Entnahme von Schutzgas zur Verfügung stehende Druckdifferenz verbraucht, wird über die Steuereinheit 7 eine Umsteuerung der Ventile 5.1, 5.2, 5.3 und 5.4 bewirkt. Die Ventile 5.1 und 5.3 werden geöffnet, wohingegen die Ventile 5.2 und 5.4 geschlossen werden. Der Verdichter 3 fördert eine Teilmenge V2 des Schutzgases aus dem zweiten Gasraum 2 über den Filter 4 in den ersten Gasraum 1, solange bis ein Druck p2 innerhalb des ersten Gasraums 1 erreicht ist. Sowohl die entnommene Teilmenge V1 des Schutzgases als auch die substituierte Teilmenge V2 werden über das Filter 4 gefördert. Der Druck p2 ist größer als der vorgegebene Mindestdruck pₘᵢₙ. Sofern der Mindestdruck pₘᵢₙ dem Nenndruck entsprechen sollte, ist der Druck p2 größer als der Nenndruck des ersten Gasraums 1.

Der Verdichter wird solange betrieben, bis eine Druckdifferenz hergestellt ist, die die Entnahme einer hinreichend großen Teilmenge V1+n aus dem ersten Gasraum 1 ermöglicht. Sodann wird eine Wartezeit eingehalten, bis sich ein entsprechendes Feuchtigkeitsgleichgewicht in dem ersten Gasraum 1 eingestellt hat. Aufgrund der Zufuhr einer getrockneten Teilmenge V2 des Schutzgases ist das Dampfdruckgefälle zwischen Wasser und Schutzgas erhöht worden. Nach einer Weile wird sich wiederum ein Gleichgewicht einstellen. Sodann erfolgt wieder eine Entnahme einer Teilmenge V1+n an Schutzgas aus dem ersten Gasraum 1 und ein Einbringen einer Teilmenge V2 des getrockneten Schutzgases von dem zweiten Gasraum 2 in den ersten Gasraum 1. Diese Verfahrensschritte werden solange wiederholt bis der Drucktaupunkt innerhalb des ersten Gasraums 1 auf eine vorgegebener Temperatur verringert wurde. Die Bestimmung des Drucktaupunktes erfolgt über die Feuchtigkeitsmessung mittels der Feuchtigkeitssensoren 10.1 und 10.2. Der Drucktaupunkt ist ein Maß für die in dem Gasraum 1 in der Gasphase vorherrschende Feuchtigkeit.

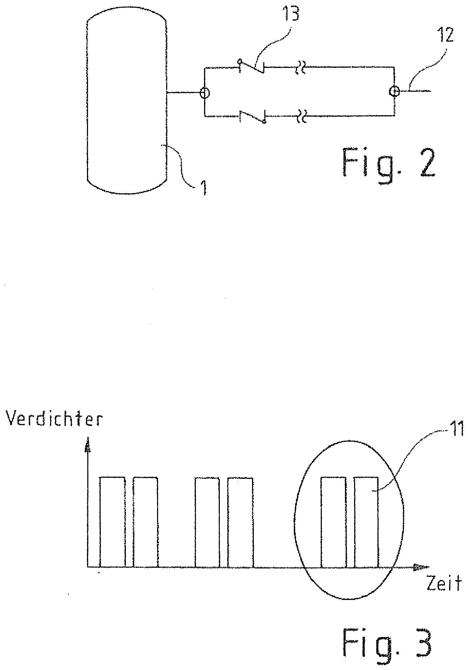

Figur 2 zeigt einen vergrößerten Ausschnitt einer Variante eines Anschlusses der Gasleitung an den ersten Gasraum 1, der als Ringleitung mit zwei Rückschlagventilen 13 ausgebildet ist. Die Rückschlagventile 13 ermöglichen einen unidirektionalen Transport des Gases (Zirkulation), wobei die Ringleitung als Vergrößerung des Gasvolumens/Totvolumens des ersten Gasraumes vorgesehen ist.

Figur 3 zeigt die Anzahl der Betriebszyklen des Verdichters 3 über die Zeit, wobei der erste Balken den Trocknungszyklus vom ersten Gasraum 1 zum zweiten Gasraum 2 zeigt, der zweite Balken den Trocknungszyklus vom zweiten Gasraum 2 zum ersten Gasraum 1 und der Abstand vom zweiten bis zum dritten Balken auf der Zeitachse die vorgegebene Wartezeit Δt veranschaulicht.

### Bezugszeichenliste

- 1: erster Gasraum
- 2: zweiter Gasraum
- 3: Verdichter
- 4: Filter
- 5.1, 5.2,5.3, 5.4: Ventile
- 6: Steuerleitung
- 7: Steuereinheit
- 8: Bedieneinheit
- 9.1, 9.2: Druckaufnehmer
- 10.1, 10.2: Feuchtigkeitssensoren
- 12: Gasleitung
- 13: Rückschlagventile

## Patentansprüche

1. Verfahren zum Trocknen eines Gasraums mit einer in dem Gasraum vorherrschenden Schutzgasatmosphäre unter Überdruck mit einem Betriebsdruck p1 und einem vorgegebenen Mindestdruck pₘᵢₙ, wobei der vorgegebene Mindestdruck pₘᵢₙ des Gasraums überwacht wird und der Betriebsdruck p1 größer als der Mindestdruck pₘᵢₙ ist, wobei das Verfahren folgende Schritte umfasst:
a) Entnehmen einer Teilmenge V1 des Schutzgases aus dem Gasraum, wobei die Teilmenge V1 einer Druckdifferenz Δp äquivalent ist, die kleiner oder gleich der Differenz zwischen p1 und pₘᵢₙ ist,
b) Einbringen einer Teilmenge V2 eines trockenen oder getrockneten Schutzgases in den Gasraum bis zu einem Gasdruck p2, der größer als pₘᵢₙ ist und
c) Wiederholen der Verfahrensschritte a) und b) nach einer vorgegebenen Wartezeit Δt.

2. Verfahren nach Anspruch 1, **dadurch gekennzeichnet, dass** die Feuchtigkeit der entnommenen Teilmenge V1 des Schutzgases gemessen wird und die Verfahrensschritte a) bis c) solange wiederholt werden, bis der Feuchtigkeitsgehalt des entnommenen Schutzgases einen vorgegebenen Wert unterschreitet.

3. Verfahren nach einem der Ansprüche 1 oder 2, **dadurch gekennzeichnet, dass** die Teilmenge V1 so bemessen wird, dass der Differenzdruck Δp etwa der Differenz zwischen dem Betriebsdruck p1 und dem Mindestdruck pₘᵢₙ des Gasraums beträgt.

4. Verfahren nach einem der Ansprüche 1 bis 3, **dadurch gekennzeichnet, dass** der Betriebsdruck p1 des Gasraums größer oder gleich einem Nenndruck des Gasraums ist.

5. Verfahren nach einem der Ansprüche 1 bis 4, **dadurch gekennzeichnet, dass** die entnommene Teilmenge V1 mittels wenigstens eines Trockenfilters getrocknet wird und danach in einem weiteren Gasraum einspeichert wird.

6. Verfahren nach einem der Ansprüche 1 bis 5, **dadurch gekennzeichnet, dass** als zu überwachender Gasraum ein Behälter für ein elektrisches Betriebsmittel oder ein elektrisches Betriebsmittel vorgesehen ist, der oder das mit einem Löschgas als Schutzgas gefüllt ist.

7. Verfahren nach Anspruch 6, **dadurch gekennzeichnet, dass** die Teilmenge V1 in einen Vorratsbehälter eingespeichert wird, aus welchem vorzugsweise die Teilmenge V2 entnommen wird.

8. Verfahren nach Anspruch 6, **dadurch gekennzeichnet, dass** die Teilmenge V2 in einen weiteren Gasraum eingespeist wird, der als Behälter für ein elektrisches Betriebsmittel oder als elektrisches Betriebsmittel ausgebildet ist.

9. Anordnung umfassend einen ersten und einen zweiten mit Schutzgas gefüllten Gasraum (1, 2), einen den ersten und den zweiten Gasraum (1, 2) verbindendes Leitungssystem (12), wenigstens einen in dem Leitungssystem (12) angeordneten Verdichter (3), wenigstens ein in dem Leitungssystem (12) angeordnetes Gastrocknungsaggregat (4), Mittel zur Erfassung des Gasdrucks innerhalb des Leitungssystems (12), Ventile (5.1, 5.2, 5.3, 5.4), die so ansteuerbar sind, dass der Verdichter (3) wahlweise Gas von dem ersten Gasraum (1) in den zweiten Gasraum (2) und Gas von dem zweiten Gasraum (2) in den ersten Gasraum (1) fördern kann, Mittel zur Steuerung des Verdichters in Abhängigkeit des Drucks innerhalb des Leitungssystems (12) sowie Mittel zur Steuerung der Ventile (5.1, 5.2, 5.3, 5.4) in Abhängigkeit der gewünschten Förderrichtung des Gases.

10. Anordnung nach Anspruch 9, **dadurch gekennzeichnet, dass** der erste Gasraum (1) ein elektrisches Betriebsmittel aufnimmt oder als elektrisches Betriebsmittel ausgebildet ist.

11. Anordnung nach Anspruch 9 oder 10, **dadurch gekennzeichnet, dass** der zweite Gasraum (2) als Vorratsbehälter für das Schutzgas ausgebildet ist.

12. Anordnung nach einem der Ansprüche 9 oder 10, **dadurch gekennzeichnet, dass** der zweite Gasraum (2) ein elektrisches Betriebsmittel aufnimmt oder als elektrisches Betriebsmittel ausgebildet ist.

## Claims

1. Method for drying a gas chamber with an inert gas atmosphere prevailing in the gas chamber under overpressure with an operating pressure p1 and a predetermined minimum pressure pₘᵢₙ, wherein the predetermined minimum pressure pₘᵢₙ of the gas chamber is monitored and the operating pressure p1 is greater than the minimum pressure pₘᵢₙ, wherein the method comprises the following steps:
a) extraction of a partial quantity V1 of the inert gas from the gas chamber, wherein the partial quantity V1 is equivalent to a pressure differential Δp, which is smaller than or equal to the differential between p1 and pₘᵢₙ,
b) introduction of a partial quantity V2 of a dry or dried inert gas into the gas chamber up to a gas pressure p2, which is greater than pₘᵢₙ and
c) repeating method steps a) and b) after a predetermined waiting time Δt.

2. Method according to claim 1, **characterised in that** the humidity of the partial quantity V1 of extracted inert gas is measured and the method steps a) to c) are repeated until the moisture content of the extracted inert gas falls below a predetermined value.

3. Method according to one of claims 1 or 2, **characterised in that** the partial quantity V1 is dimensioned so that the differential pressure Δp amounts to roughly the differential between the operating pressure p1 and the minimum pressure pₘᵢₙ of the gas chamber.

4. Method according to any one of claims 1 to 3, **characterised in that** the operating pressure p1 of the gas chamber is greater than or equal to a nominal pressure of the gas chamber.

5. Method according to any one of claims 1 to 4, **characterised in that** the partial quantity V1 removed is dried by means of at least one dry filter and is then stored in another gas chamber.

6. Method according to any one of claims 1 to 5, **characterised in that** a container for an electrical equipment or an electrical equipment, which container or equipment is filled with a quenching gas as inert gas, is provided as a gas chamber to be monitored.

7. Method according to claim 6, **characterised in that** the partial quantity V1 is stored in a storage tank, from which preferably the partial quantity V2 is extracted.

8. Method according to claim 6, **characterised in that** the partial quantity V2 is fed into another gas chamber, which is formed as a container for an electrical equipment or as an electrical equipment.

9. Arrangement comprising a first and a second gas chamber (1, 2) filled with inert gas, a line system (12) connecting the first and the second gas chamber (1, 2), at least one compressor (3) arranged in the line system (12), at least one gas drying unit (4) arranged in the line system (12), means for detecting the gas pressure inside the line system (12), valves (5.1, 5.2, 5.3, 5.4), which can be controlled so that the compressor (3) can selectively convey gas from the first gas chamber (1) into the second gas chamber (2) and gas from the second gas chamber (2) into the first gas chamber (1), means for controlling the compressor as a function of the pressure inside the line system (12) and means for controlling the valves (5.1, 5.2, 5.3, 5.4) as a function of the desired conveying direction of the gas.

10. Arrangement according to claim 9, **characterised in that** the first gas chamber (1) receives an electrical equipment or is formed as an electrical equipment.

11. Arrangement according to claim 9 or 10, **characterised in that** the second gas chamber (2) is formed as a storage tank for the inert gas.

12. Arrangement according to one of claims 9 or 10, **characterised in that** the second gas chamber (2) accommodates an electrical equipment or is formed as an electrical equipment.

## Revendications

1. Procédé de séchage d'un compartiment à gaz comprenant une atmosphère protectrice prédominante en surpression dans le compartiment à gaz avec une pression de service p1 et une pression minimale pₘᵢₙ prédéfinie, la pression minimale pₘᵢₙ prédéfinie du compartiment à gaz étant surveillée et la pression de service p1 étant supérieure à la pression minimale pₘᵢₙ, le procédé comprenant les étapes suivantes :
a) prélèvement hors du compartiment à gaz d'une quantité partielle V1 du gaz protecteur, la quantité partielle V1 étant équivalente à une différence de pression Δp, qui est inférieure ou égale à la différence entre p1 et pₘᵢₙ,
b) introduction d'une quantité partielle V2 d'un gaz protecteur sec ou séché dans le compartiment à gaz jusqu'à une pression de gaz p2, qui est supérieure à pₘᵢₙ et
c) répétition des étapes de procédé a) et b) après un temps d'attente prédéfini Δt.

2. Procédé selon la revendication 1, **caractérisé en ce que** l'humidité de la quantité partielle V1 prélevée du gaz protecteur est mesurée et les étapes de procédé a) à c) sont répétées jusqu'à ce que la teneur en humidité du gaz protecteur prélevé est inférieure à une valeur prédéfinie.

3. Procédé selon l'une des revendications 1 ou 2, **caractérisé en ce que** la quantité partielle V1 est dimensionnée de telle sorte que la pression différentielle Δp correspond approximativement à la différence entre la pression de service p1 et la pression minimale pₘᵢₙ du compartiment à gaz.

4. Procédé selon l'une des revendications 1 à 3, **caractérisé en ce que** la pression de service p1 du compartiment à gaz est supérieure ou égale à une pression nominale du compartiment à gaz.

5. Procédé selon l'une des revendications 1 à 4, **caractérisé en ce que** la quantité partielle V1 prélevée est séchée au moyen d'au moins un filtre à sec et est ensuite stockée dans un autre compartiment à gaz.

6. Procédé selon l'une des revendications 1 à 5, **caractérisé en ce qu'**un contenant pour un équipement électrique ou un équipement électrique, qui est rempli d'un gaz d'extinction en guise de gaz protecteur, est prévu comme compartiment à gaz à surveiller.

7. Procédé selon la revendication 6, **caractérisé en ce que** la quantité partielle V1 est stockée dans un réservoir duquel la quantité partielle V2 est de préférence prélevée.

8. Procédé selon la revendication 6, **caractérisé en ce que** la quantité partielle V2 est alimentée dans un autre compartiment à gaz, qui se présente sous la forme d'un contenant pour équipement électrique ou d'un équipement électrique.

9. Ensemble comprenant un premier et un second compartiment à gaz (1, 2) remplis de gaz protecteur, un système de conduites (12) reliant le premier et le second compartiment à gaz (1, 2), au moins un compresseur (3) disposé dans le système de conduites (12), au moins un groupe de séchage de gaz (4) disposé dans le système de conduites (12), des moyens de détection de la pression du gaz à l'intérieur du système de conduites (12), des soupapes (5.1, 5.2, 5.3, 5.4), qui peuvent être commandées de telle manière que le compresseur (3) peut transporter au choix du gaz du premier compartiment à gaz (1) au second compartiment à gaz (2) et du gaz du second compartiment à gaz (2) au premier compartiment à gaz (1), des moyens de commande du compresseur en fonction de la pression à l'intérieur du système de conduites (12) ainsi que des moyens de commande des soupapes (5.1, 5.2, 5.3, 5.4) en fonction du sens de transport souhaité du gaz.

10. Ensemble selon la revendication 9, **caractérisé en ce que** le premier compartiment à gaz (1) reçoit un équipement électrique ou se présente sous la forme d'un équipement électrique.

11. Ensemble selon la revendication 9 ou 10, **caractérisé en ce que** le second compartiment à gaz (2) est conçu sous la forme d'un réservoir pour le gaz protecteur.

12. Ensemble selon l'une des revendications 9 ou 10, **caractérisé en ce que** le second compartiment à gaz (2) reçoit un équipement électrique ou se présente sous la forme d'un équipement électrique.
